# EUROPÄISCHE PATENTSCHRIFT

(11) **EP 1 507 994 B1**
(45) Veröffentlichungstag und Bekanntmachung des Hinweises auf die Patenterteilung: **02.08.2006**
(21) Anmeldenummer: 03755904.4
(22) Anmeldetag: 27.05.2003
(51) Int. Cl.: F16H 63/42, B60K 35/00

(54) **OPTISCHE ANZEIGEVORRICHTUNG EINER WÄHLHEBELANORDNUNG**
OPTICAL DISPLAY DEVICE PERTAINING TO A SELECTOR-LEVER ARRANGEMENT
DISPOSITIF D'AFFICHAGE OPTIQUE APPARTENANT A UN SYSTEME DE LEVIER DE SELECTION

(30) Priorität: 28.05.2002 DE 10223854
(43) Veröffentlichungstag der Anmeldung: 23.02.2005
(73) Patentinhaber: ZF Lemförder Metallwaren AG, 49448 Lemförde (DE)
(72) Erfinder: GIEFER, Andreas, 49448 Lemförde (DE); MEYER, Jörg, 49419 Wagenfeld (DE); VÖLZ, Michael, 49457 Drebber (DE)
(86) Internationale Anmeldenummer: PCT/DE2003/001727
(87) Internationale Veröffentlichungsnummer: WO 2003/102449

(56) Entgegenhaltungen:
- EP-A- 0 106 789
- EP-A- 0 416 227
- EP-A- 0 616 153
- EP-A- 1 134 456
- GB-A- 2 303 673
- US-A- 6 046 673
- US-B1- 6 360 624
- PATENT ABSTRACTS OF JAPAN vol. 2002, no. 03, 3. April 2002 (2002-04-03) & JP 2001 322444 A (NIPPON SEIKI CO LTD), 20. November 2001 (2001-11-20)

## Beschreibung

Die Erfindung betrifft eine optische Anzeigevorrichtung einer im Kraftfahrzeug angeordneten Wählhebelanordnung mit einem in diesem gelagerten Wählhebel zum Umschalten zwischen unterschiedlichen Schaltzuständen eines Kraftfahrzeuggetriebes.

Das Dokument EP-A2-0 106 789, stellt den nächstliegenden Stand der Technik dar. Es zeigt ein Optische Anzeigevorrichtung mit den Merkmalen des Obergegriffs des Anspruchs 1.

Die DE 199 16 924 A1 offenbart eine optische Anzeigevorrichtung einer Wählhebelanordnung mit einem im Kraftfahrzeug gelagerten Wählhebel zum Umschalten zwischen unterschiedlichen Schaltzuständen eines Kraftfahrzeuggetriebes, welcher entlang einer Schaltgasse aus einer ersten Wählhebelposition in eine zweite Wählhebelposition schwenkbar ist. Die optische Anzeigevorrichtung weist mehrere an unterschiedlichen Anzeigepositionen angeordnete Anzeigeelemente zum Anzeigen von den Schaltzuständen eineindeutig zugeordneten Symbolen auf, wobei jeder Anzeigeposition ein einziger dieser Schaltzustände zugeordnet ist. Der aktuelle Schaltzustand des Kraftfahrzeuggetriebes wird dabei optisch hervorgehoben, wobei der Ort dieser Hervorhebung vom Ort des dem aktuell eingelegten Schaltzustand zugeordneten Anzeigelements abhängig ist.

Eine derartige optische Anzeigevorrichtung ist nicht immer eindeutig und leicht verständlich und kann somit zu Irritationen oder Fehlbedienungen führen.

Ausgehend von diesem Stand der Technik liegt der Erfindung die Aufgabe zu Grunde, eine leicht verständliche Anzeige von Schaltzuständen eines Kraftfahrzeuggetriebes zu ermöglichen, so dass die Gefahr von Irritationen oder Fehlbedienungen verringert wird.

Diese Aufgabe wird erfindungsgemäß durch eine optische Anzeigevorrichtung nach Anspruch 1 gelöst. Bevorzugte Weiterbildungen sind in den Unteransprüchen beschrieben.

Das im Folgenden näher beschriebene Verfahren zum Anzeigen von unterschiedlichen Schaltzuständen eines Kraftfahrzeuggetriebes eineindeutig zugeordneten Symbolen an wenigstens zwei unterschiedlichen Anzeigepositionen wird in der vorliegenden Anmeldung nicht beansprucht. Das Verfahren weist folgende Verfahrensschritte auf:
(a) Erfassen des aktuellen Schaltzustands des Kraftfahrzeuggetriebes,
(b) Anzeigen des dem aktuellen Schaltzustand zugeordneten Symbols an einer ersten der beiden Anzeigepositionen,
(c) Anzeigen des einem anderen Schaltzustand der Schaltzustände zugeordneten Symbols an der zweiten Anzeigeposition und
(d) Umschalten des Kraftfahrzeuggetriebes von dem aktuellen Schaltzustand in den anderen Schaltzustand und
(e) Anzeigen des dem anderen Schaltzustand zugeordneten Symbols an der ersten Anzeigeposition nach dem Umschalten.

Gemäß dem Verfahren wird stets der von dem Kraftfahrzeuggetriebe aktuell eingenommene Schaltzustand an der ersten Anzeigeposition angezeigt, so dass der Fahrzeugführer sich nur auf eine einzige Anzeige an einem einzigen Anzeigeort konzentrieren muss, wenn er den aktuellen Schaltzustand des Kraftfahrzeuggetriebes abfragen möchte. Ferner wird vor dem Umschalten von dem aktuellen Schaltzustand in den anderen Schaltzustand dieser andere Schaltzustand über das zugeordnete Symbol an der zweiten Anzeigeposition angezeigt. Hiermit wird eine leicht verständliche und eindeutige Anzeige von Schaltzuständen geschaffen, so dass Fehlbedienungen und Irritationen wirksam entgegengewirkt werden kann.

Bevorzugt wird nach dem Umschalten das dem anderen Schaltzustand zugeordnete Symbol nicht mehr an der zweiten Anzeigeposition angezeigt. Vielmehr kann nach dem Umschalten an der zweiten Anzeigeposition das einem auswählbaren Schaltzustand der Schaltzustände zugeordnete Symbol angezeigt werden, wobei unter einem auswählbaren Schaltzustand einer der Schaltzustände des Kraftfahrzeuggetriebes zu verstehen ist, der sich von dem aktuell vom Kraftfahrzeuggetriebe eingenommenen Schaltzustand unterscheidet.

Insbesondere ist es vorteilhaft, wenn der auswählbare Schaltzustand, dessen zugeordnetes Symbol an der zweiten Anzeigeposition angezeigt wird, ein mit einem einzigen Umschaltvorgang erreichbarer Schaltzustand der Schaltzustände ist. Somit hat der Fahrzeugführer einen Überblick über die nächsten Schaltmöglichkeiten.

Da in einem Kraftfahrzeug regelmäßig mehrmals zwischen unterschiedlichen Schaltzuständen des Kraftfahrzeuggetriebes umgeschaltet wird, kann das Verfahren für jedes Umschalten erneut durchgeführt werden, indem nach der Ausführung des Verfahrensschritts (e) erneut mit der Ausführung des Verfahrensschritts (a) begonnen wird. In diesem Fall wird der "andere Schaltzustand" nach dem Verfahrensschritt (d) zum neuen "aktuellen Schaltzustand" des wiederholt ausgeführten Verfahrensschritts (a). Auch der "andere Schaltzustand" gemäß Verfahrensschritt (c) kann sich bei der Wiederholung dieses Verfahrensschritts (c) ändern.

Das Erfassen der aktuellen Wählhebelposition kann aus einem Speicher heraus erfolgen, in dem der aktuelle Schaltzustand des Getriebes abgelegt ist. Bevorzugt wird der aktuelle Schaltzustand aber unmittelbar vom Getriebe abgefragt.

Das Verfahren eignet sich besonders gut für eine Wählhebelanordnung, deren Wählhebel von einer stabilen Wählhebelstellung ausgehend in zumindest eine andere instabile Wählhebelstellung geschaltet werden kann. Hierbei bedeutet der Begriff "instabil", dass der Wählhebel aus einer instabilen Wählhebelstellung automatisch in die stabile Wählhebelstellung zurückkehrt, welche die Ruhestellung des Wählhebels bildet. Aus diesem Grund ist bevorzugt die erste Anzeigeposition der stabilen Wählhebelstellung des Wählhebels einer im Kraftfahrzeug angeordneten Wählhebelanordnung zugeordnet, wohingegen die zweite Anzeigeposition einer instabilen Wählhebelstellung des Wählhebels zugeordnet ist.

Erfindungsgemäß wird ferner eine optische Anzeigevorrichtung einer Wählhebelanordnung mit einem im Kraftfahrzeug gelagerten Wählhebel zum Umschalten zwischen unterschiedlichen Schaltzuständen eines Kraftfahrzeuggetriebes geschaffen, welcher entlang wenigstens einer Schaltgasse aus einer ersten Wählhebelposition in zumindest eine zweite Wählhebelposition schwenkbar ist, wobei die optische Anzeigevorrichtung wenigstens zwei an unterschiedlichen Anzeigepositionen angeordnete Anzeigeelemente zum Anzeigen von den Schaltzuständen eineindeutig zugeordneten Symbolen und eine Erfassungsvorrichtung zum Erfassen des aktuellen Schaltzustands aufweist. Von dem ersten Anzeigeelement wird dabei während des Betriebs der Anzeigevorrichtung stets das dem aktuellen Schaltzustand zugeordnete Symbol angezeigt.

Diese zum Ausführen des Verfahrens geeignete Anzeigevorrichtung ist für den Fahrzeugführer leicht verständlich und zeigt eindeutig den aktuellen Schaltzustand an. Somit werden Irritationen und Fehlbedienungen vermieden, da sich der Fahrzeugführer nur auf ein einziges Anzeigeelement konzentrieren muss, wenn er den aktuellen Schaltzustand des Kraftfahrzeuggetriebes in Erfahrung bringen möchte.

Bevorzugt wird von dem zweiten Anzeigeelement das einen auswählbaren der Schaltzustände zugeordnete Symbol angezeigt, so dass der Fahrzeugführer an der Anzeige des zweiten Anzeigeelements erkennen kann, welcher Schaltzustand ausgehend vom aktuellen Schaltzustand durch Betätigung des Schalthebels auswählbar ist. Auch dieses trägt erheblich zur Eindeutigkeit und leichteren Verständlichkeit der Anzeigevorrichtung bei, da nicht mehr alle möglichen Schaltzustände gleichzeitig angezeigt werden.

Die optische Anzeigevorrichtung ist besonders geeignet für einen Wählhebel, der ausgehend von einer stabilen Wählhebelposition in wenigstens eine andere instabile Wählhebelposition schwenkbar ist, von der aus der Wählhebel automatisch in die stabile Wählhebelposition zurückkehren kann. Bevorzugt ist daher die erste Wählhebelposition als stabile Wählhebelposition und die zweite Wählhebelposition als instabile Wählhebelposition ausgelegt.

Wenn viele Wählhebelstellungen über den Wählhebel erreichbar sein sollen, ist es vorteilhaft, dass der Wählhebel in zumindest eine nicht in der wenigstens einen Schaltgasse liegende, dritte Wählhebelposition schwenkbar ist, der ein an einer dritten Anzeigeposition angeordnetes drittes Anzeigeelement zugeordnet ist, welches mit den anderen beiden Anzeigeelementen nicht auf einer Geraden liegt. Diese Weiterbildung der Erfindung ermöglicht es zum Beispiel, ausgehend von der wenigstens einen Schaltgasse mit dem Wählhebel über eine Wählgasse in eine zweite Schaltgasse zu schwenken, so dass für das Erreichen der dritten Wählhebelposition deutlich andere Bewegungsabläufe als für das Erreichen der ersten und der zweiten Wählhebelpositionen erforderlich sind. Dies erhöht ebenfalls die Erfassbarkeit und Verständlichkeit für den Fahrzeugführer, da nun alle Anzeigeelemente nicht mehr auf einer einzigen Geraden liegen. Bevorzugt ist diese dritte Wählhebelposition auch eine instabile Wählhebelposition, von der aus sich der Wählhebel automatisch in die stabile Wählhebelposition zurückstellen kann.

Die Anzeigeelemente können entweder unmittelbar an der Wählhebelanordnung, wie z.B. am Knauf des Wählhebels, oder aber separat von der Wählhebelanordnung, wie z.B. an der Mittelkonsole, im Kraftfahrzeug angeordnet sein. Insbesondere sind die Anzeigeelemente am Armaturenbrett angeordnet, weil in diesem Fall der Fahrer seinen Blick nicht mehr so weit von der Straße abwenden muss, da das Armaturenbrett regelmäßig näher an der Frontscheibe des Kraftfahrzeuges liegt als die Mittelkonsole.

Die Anzeigeelemente sollen nach Möglichkeit derart angeordnet werden, dass sie dem Fahrzeugführer ein rasches Erfassen des aktuellen Schaltzustands und ferner ein rasches Erfassen der aktuell auswählbaren Schaltzustände ermöglichen. Als besonders geeignet hat sich herausgestellt, wenn die Anzeigeelemente geometrisch in ähnlicher Weise wie die Wählhebelpositionen angeordnet sind. Deshalb sind die Anzeigeelemente bevorzugt derart angeordnet, dass die Projektion der Wählhebelpositionen auf eine Ebene durch eine geraden- und parallelentreue Abbildungsvorschrift in die Anzeigepositionen überführbar ist. Der Fahrzeugführer erkennt somit in der Anordnung der Anzeigeelemente die über den Wählhebel einlegbaren Wählhebelpositionen wieder, so dass er keine Zeit damit verbringen muss, die unterschiedlichen Anzeigeelemente den unterschiedlichen Wählhebelpositionen zuzuordnen.

Sind in diesem Fall wenigstens drei nicht auf einer Gerade liegende Anzeigeelemente vorhanden, so ist der Wählhebel wenigstens in zwei unterschiedliche, nicht parallele Richtungen schwenkbar. Diese Schwenkrichtungen können in der optischen Anzeigevorrichtung nachgebildet werden, indem das über die Abbildungsvorschrift erzeugte Bild des Schwenkraums des Wählhebels mittels Schaltgassenanzeigen optisch hervorhebbar ist, die sich von der ersten zu der zweiten und von der ersten zu der dritten Anzeigeposition erstrecken. Diese Schaltgassenanzeigen können z. B. durch längliche Leuchten gebildet werden, die sich deutlich von dem Hintergrund abheben, an dem die Anzeigeelemente und die Schaltgassenanzeigen angeordnet sind. Die Schaltgassenanzeigen stellen ebenfalls eine Erleichterung für den Fahrzeugführer dar, der nun sehr schnell in der optischen Anzeigevorrichtung ein Bild des Schwenkraumes des Wählhebels erkennt.

Ferner ist es möglich, dass z.B. das zweite Anzeigelement Teil einer ersten der Schaltgassenanzeigen ist und das dritte Anzeigelement Teil einer zweiten der Schaltgassenanzeigen ist.

Besonders bevorzugt können die Schaltgassenanzeigen unabhängig voneinander unterschiedlich optisch dargestellt werden, so dass nur eine der Schaltgassenanzeigen dargestellt wird, die zu einer Wählhebelposition führt, der ein auswählbarer und erreichbarer Schaltzustand des Kraftfahrzeuggetriebes zugeordnet ist. Somit können z.B. Schaltgassenanzeigen nicht dargestellt bzw. nicht optisch hervorgehoben werden, die zu einer Wählhebelposition führen, welche ausgehend von dem aktuellen Schaltzustand keinem erreichbaren Schaltzustand des Kraftfahrzeuggetriebes zugeordnet ist. Auch dies trägt in hohem Maße zur Übersichtlichkeit bei, so dass sich der Fahrzeugführer nur noch auf erreichbare Schaltzustände konzentrieren muss.

Der Begriff eineindeutig bedeutet im Sinne der Erfindung, dass jedem Schaltzustand des Getriebes nur ein einziges Symbol zugeordnet ist und jedem Symbol auch nur ein einziger Schaltzustand des Getriebes zugeordnet ist.

Die Erfindung wird nachfolgend anhand bevorzugter Ausführungsformen unter Bezugnahme auf die Zeichnung beschrieben. In der Zeichnung zeigen:
- Figur 1: eine optische Anzeige gemäß einer ersten Ausführungsform der Erfindung;
- Figur 2: Wählhebelpositionen einer Wählhebelanordnung für eine Anzeigevorrichtung gemäß einer zweiten Ausführungsform der Erfindung;
- Figur 3: die Ausführungsform nach Figur 2 im Schaltzustand A;
- Figur 4: die Ausführungsform nach Figur 2 im Schaltzustand B;
- Figur 5: die Ausführungsform nach Figur 2 in einem modifizierten Schaltzustand B;
- Figur 6: Wählhebelpositionen einer Wählhebelanordnung für eine Anzeigevorrichtung gemäß einer dritten Ausführungsform der Erfindung;
- Figur 7: die Ausführungsform nach Figur 6 im Schaltzustand N (Leerlauf);
- Figur 8: die Ausführungsform nach Figur 6 im Schaltzustand D (Vorwärtsfahrt);
- Figur 9: die Ausführungsform nach Figur 6 im Schaltzustand R (Rückwärtsfahrt).

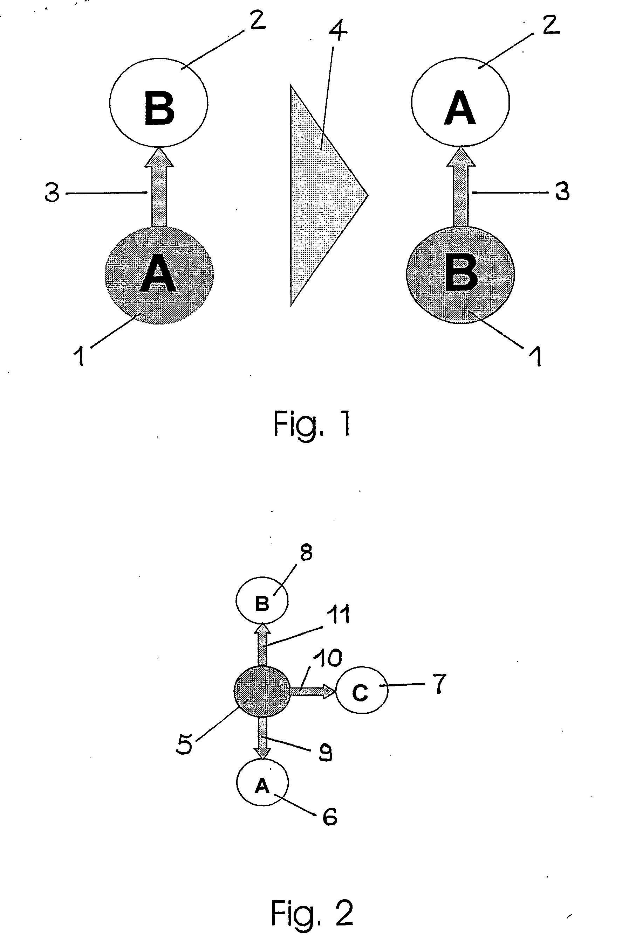

Aus Figur 1 ist eine erste Ausführungsform einer erfindungsgemäßen Anzeige ersichtlich, anhand derer in einfacher Weise das Verfahren veranschaulicht werden kann. Bezugszeichen 1 bezeichnet ein an einer ersten Anzeigeposition angeordnetes erstes Anzeigeelement, welches einer stabilen Wählhebelstellung eines Wählhebels einer im Kraftfahrzeug angeordneten Wählhebelanordnung zugeordnet ist. Von dem ersten Anzeigeelement 1 wird das Symbol "A" angezeigt, welches einen ersten Schaltzustand eines zwei Schaltzustände aufweisenden Getriebes (nicht dargestellt) repräsentiert. Ein zweites Anzeigeelement 2 ist im Abstand zum ersten Anzeigelement 1 an einer zweiten Anzeigeposition angeordnet und zeigt das Symbol "B" an, welches dem anderen, auswählbaren der beiden Schaltzustände des Kraftfahrzeuggetriebes zugeordnet ist. Die Anzeigepositionen der beiden Anzeigeelemente 1 und 2 repräsentieren dabei auch die tatsächlichen Wählhebelstellungen des Wählhebels, wobei die erste Anzeigeposition der stabilen Wählhebelstellung und die zweite Anzeigeposition einer instabilen Wählhebelstellung zugeordnet ist. Der Pfeil 3 zwischen den beiden Anzeigelementen 1 und 2 deutet an, dass durch eine Bewegung des Wählhebels von der stabilen Wählhebelposition in die instabile Wählhebelposition, das Getriebe vom Schaltzustand A in den Schaltzustand B umgeschaltet werden kann.

Der Umschaltvorgang selbst wird durch Pfeil 4 angedeutet, wobei links vom Pfeil 4 der Zustand der Anzeigeelemente 1 und 2 vor dem Umschalten und rechts vom Pfeil 4 der Zustand der Anzeigeelemente 1 und 2 nach dem Umschalten dargestellt ist. Nach dem Umschalten zeigt das erste Anzeigeelement 1 nunmehr das Symbol B für den zweiten Schaltzustand des Getriebes an, wohingegen das zweite Anzeigeelement 2 das Symbol A für den ersten Schaltzustand des Getriebes anzeigt. Dies bedeutet, dass der durch B symbolisierte zweite Schaltzustand des Getriebes nun der aktuell von dem Getriebe angenommene Schaltzustand ist, wohingegen der durch das Symbol A repräsentierte Schaltzustand nun der auswählbare Schaltzustand ist. Der Pfeil 3 zwischen den beiden Anzeigelementen 1 und 2 deutet hier an, dass durch eine Bewegung des Wählhebels von der stabilen Wählhebelposition in die instabile Wählhebelposition, das Getriebe vom Schaltzustand B in den Schaltzustand A zurückgeschaltet werden kann.

Aus Figur 2 sind Wählhebelpositionen einer Wählhebelanordnung für eine Anzeigevorrichtung gemäß einer zweiten Ausführungsform der Erfindung ersichtlich, wobei das Bezugszeichen 5 die stabile Wählhebelstellung des Wählhebels und die Bezugszeichen 6, 7 und 8 die instabilen Wählhebelstellungen des Wählhebels bezeichnen. Zwischen den Wählhebelstellungen 5 und 6, 5 und 7 sowie 5 und 8 sind jeweils Pfeile 9, 10 und 11 dargestellt, welche die Schwenkrichtung des Wählhebels kennzeichnen, um ausgehend von der stabilen Wählhebelposition 5 eine der instabilen Wählhebelstellungen 6, 7 und 8 zu erreichen. Wie aus der Figur ersichtlich, ist die Wählhebelposition 8 dem Schaltzustand B, die Wählhebelposition 7 dem Schaltzustand C und die Wählhebelposition 6 dem Schaltzustand A zugeordnet.

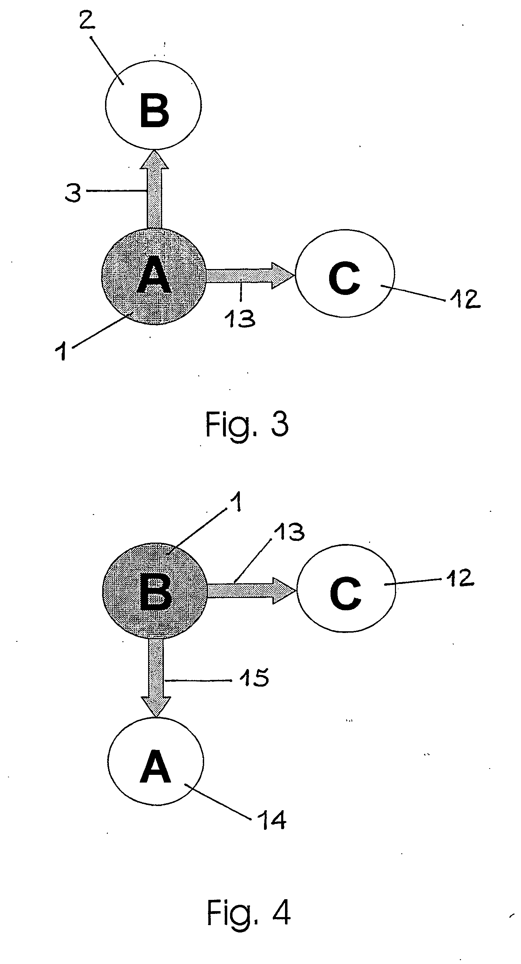

Aus Figur 3 ist eine Anzeigevorrichtung gemäß der zweiten Ausführungsform für die Wählhebelanordnung nach Figur 2 ersichtlich, wobei das Kraftfahrzeuggetriebe in den mit A bezeichneten Schaltzustand gestellt ist, so dass das der stabilen Wählhebelposition zugeordnete Anzeigelement 1 das Symbol A anzeigt. Zur Anzeige der Wählhebelposition C ist ein Anzeigeelement 12 vorgesehen, wobei durch Pfeil 13 verdeutlicht wird, dass durch ein Verschwenken des Wählhebels von der stabilen Wählhebelstellung A in die instabile Wählhebelstellung C der Schaltzustand C im Getriebe eingestellt werden kann. Wie in Fig. 1 ist zur Anzeige der Wählhebelposition B das Anzeigeelement 2 vorgesehen, wobei durch den Pfeil 3 verdeutlicht wird, dass durch ein Verschwenken des Wählhebel von der stabilen Wählhebelstellung A in die instabile Wählhebelstellung B der Schaltzustand B im Getriebe eingestellt werden kann. Ein Anzeigeelement 14 (siehe Fig. 4) für den Schaltzustand A ist hier optisch inaktiv, da ausgehend vom aktuellen Schaltzustand A das Auswählen des Schaltzustands A keine Änderung des Getriebezustands herbeiführen würde.

Gemäß Figur 4 ist die Anzeigevorrichtung gemäß der zweiten Ausführungsform für den mit B bezeichneten Schaltzustand als aktuellen Zustand des Getriebes dargestellt, so dass das der stabilen Wählhebelposition zugeordnete Anzeigelement 1 das Symbol B anzeigt. Zur Anzeige der Wählhebelposition A ist das Anzeigeelement 14 vorgesehen, wobei durch Pfeil 15 verdeutlicht wird, dass durch ein Verschwenken des Wählhebels von der stabilen Wählhebelstellung B in die instabile Wählhebelstellung A der Schaltzustand A im Getriebe eingestellt werden kann. Wie in Fig. 3 ist zur Anzeige der Wählhebelposition C das Anzeigeelement 12 vorgesehen, wobei durch den Pfeil 13 verdeutlicht wird, dass durch ein Verschwenken des Wählhebels von der stabilen Wählhebelstellung B in die instabile Wählhebelstellung C der Schaltzustand C im Getriebe eingestellt werden kann. Das Anzeigeelement 2 für den Schaltzustand B ist hier optisch inaktiv, da ausgehend vom aktuellen Schaltzustand B das Auswählen des Schaltzustands B keine Änderung des Getriebezustands herbeiführen würde.

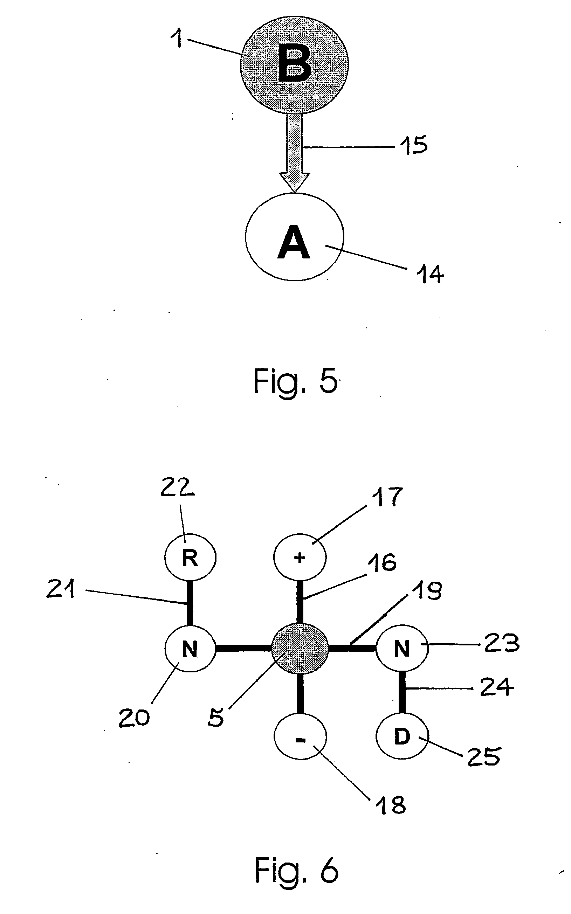

Aus Figur 5 ist eine modifizierte Anzeigevorrichtung gemäß der zweiten Ausführungsform ersichtlich, da nach dieser modifizierten Form aus dem aktuellen Zustand B heraus der Zustand C nicht erreichbar ist. Aus diesem Grund stellt das Anzeigeelement 12 nicht das Symbol C dar.

Gemäß der zweiten Ausführungsform können auch die Pfeile 3, 13 und 15 in Abhängigkeit von den jeweils auswählbaren bzw. erreichbaren Schaltzuständen durch dafür ausgelegte Anzeigen anzeigbar oder nicht anzeigbar sein.

Aus Figur 6 ist ein Schaltbild ersichtlich, wobei die Position 5 einer stabilen Stellung eines Wählhebels einer Wählhebelanordnung entspricht. Entlang einer Schaltgasse 16 kann der Wählhebel in eine Richtung in eine mit + gekennzeichnete instabile Position 17 und in die umgekehrte Richtung in eine mit - gekennzeichnete instabile Position 18 geschwenkt werden. Ferner kann der Wählhebel entlang einer Wählgasse 19 in eine Richtung über eine mit N gekennzeichnete instabile Wählhebelstellung 20 in eine zweite Schaltgasse 21 geschwenkt werden, an deren der Wählhebelstellung 20 abgewandten Ende eine mit R gekennzeichnete instabile Wählhebelstellung 22 zum Einlegen des Rückwärtsganges vorgesehen ist. Wird der Wählhebel entlang der Wählgasse 19 in die entgegengesetzte Richtung geschwenkt, so gelangt der Wählhebel über eine mit N gekennzeichnete instabile Wählhebelposition 23 in eine dritte Schaltgasse 24, an deren der Wählhebelstellung 23 abgewandten Ende eine mit D gekennzeichnete instabile Wählhebelstellung 25 vorgesehen ist, über die der Vorwärtsbetriebszustand des Getriebes eingestellt werden kann.

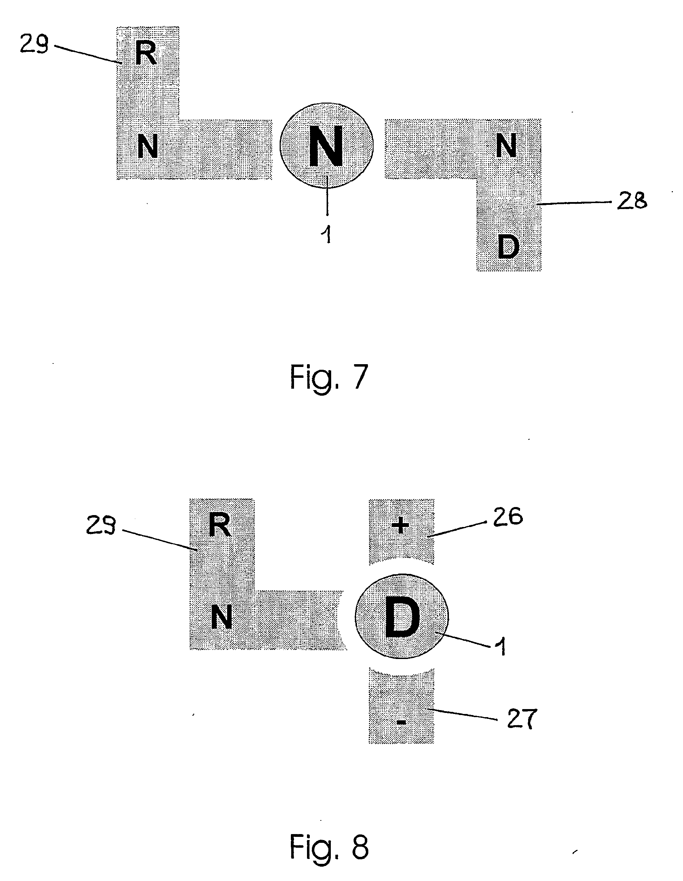

Aus Figur 7 ist die dem Schaltschema nach Figur 6 zugeordnete Anzeigevorrichtung gemäß einer dritten Ausführungsform der Erfindung ersichtlich, wobei das Anzeigeelement 1 den mit dem Symbol N bezeichneten Leerlaufzustand des Getriebes anzeigt und der stabilen Wählhebelstellung 8 zugeordnet ist. Erfindungsgemäß zeigt das Anzeigelement 1 stets das Symbol für den aktuell eingelegten Schaltzustand des Kraftfahrzeuggetriebes an. Ausgehend vom Leerlauf N sind die Schaltzustände R und D auswählbar, wobei in der Anzeigevorrichtung deutlich gemacht wird, dass der Fahrzeugführer den Wählhebel zunächst entlang der Wählgasse 19 über die mit N bezeichnete Wählhebelpositionen 20, 23 in andere Schaltgassen 21, 24 schwenken muss, um die den auswählbaren Schaltzuständen R, D zugeordneten Wählhebelpositionen 22, 25 zu erreichen. Gemäß dieser Ausführungsform werden also nicht nur die auswählbaren Schaltzustände R und D, sondern auch die Schaltwege optisch hervorgehoben, entlang welcher der Schalthebel geschwenkt werden muss, um die Schaltzustände R bzw. D zu erreichen. Die mit + und - bezeichneten Wählhebelstellungen 17 und 18 dienen zum Herauf- bzw. Herunterschalten der Gänge, wenn das Getriebe den Vorwärtsfahrzustand D angenommen hat. Da ein Anwählen der Wählhebelstellungen + und - somit aus dem Leerlaufzustand N heraus keine Wirkung entfaltet, werden diesen Wählhebelpositionen von der Anzeigevorrichtung auch nicht angezeigt.

Aus Figur 8 ist die Anzeigevorrichtung gemäß der zweiten Ausführungsform in einem Zustand ersichtlich, in dem das Kraftfahrzeuggetriebe den mit D bezeichneten Schaltzustand für den Vorwärtsfahrbetrieb angenommen hat. Entsprechend wird das Symbol D von dem Anzeigeelement 1 dargestellt. Da von diesem Schaltzustand des Getriebes die mit + und - gekennzeichneten Wählhebelstellungen eine Wirkung entfalten können, werden diese Wählhebelstellungen auch durch Anzeigeelemente 26 und 27 optisch hervorgehoben. Dabei bedeutet das Plus-Symbol, dass im Vorwärtsfahrbetrieb das Kraftfahrzeuggetriebe um einen Gang heraufgeschaltet wird und das Minus-Symbol, dass das Kraftfahrzeuggetriebe im Vorwärtsfahrbetrieb um einen Gang heruntergeschaltet wird. Da der Schaltzustand D bereits ausgewählt ist, muss das Anzeigeelement bzw. die Schaltgassenanzeige 28, welche der Wählhebelstellung D zugeordnet ist, nicht mehr optisch hervorgehoben werden, wie dies noch in Fig. 7 der Fall war. Da aus dem aktuellen Schaltzustand D heraus aber die Schaltzustände N und R auswählbar sind, werden die diesen Schaltstellungen zugeordneten Anzeigeelemente bzw. Schaltgassenanzeige 29 auch optisch hervorgehoben dargestellt.

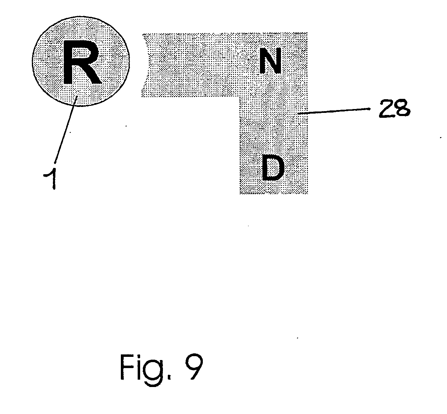

Aus Figur 9 ist die Anzeigevorrichtung gemäß der zweiten Ausführungsform im Rückwärtsfahrbetrieb des Getriebes ersichtlich. Das von dem Anzeigeelement 1 angezeigte R zeigt diese Getriebebetriebsart an, wobei aus diesem Getriebezustand heraus nur der mit N gekennzeichnete Leerlauf und der mit D gekennzeichnete Vorwärtsfahrbetrieb auswählbar sind. Die Symbole beider Schaltzustände werden demgemäß von den zugeordneten Anzeigeelementen bzw. Schaltgassenanzeige 28 angezeigt, wohingegen die Anzeigelemente bzw. Schaltgassenanzeige 29 nicht dargestellt werden, da der Schaltzustand R bereits ausgewählt ist. Da aus dem Schaltzustand R die Anwahl der mit + und - gekennzeichneten Wählhebelposition 17, 18 keine Wirkung entfaltet, werden von den Anzeigeelementen 26 und 27 diese Wählhebelpositionen auch nicht optisch hervorgehoben.

Gemäß der dritten Ausführungsform werden zum Anzeigen der den auswählbaren Schaltzuständen zugeordnete Symbole D, R und N Schaltgassenanzeigen 28, 29 verwendet, wobei die Schaltgassenanzeige 28 gleichzeitig die Wählhebelstellung 25, die Schaltgasse 24, die Wählhebelstellung 23 und den Teil der Wählgasse 19 symbolhaft darstellt, der zwischen der Wählhebelstellung 5 und der Wählhebelstellung 23 verläuft. Ferner stellt die Schaltgassenanzeige 29 gleichzeitig die Wählhebelstellung 22, die Schaltgasse 21, die Wählhebelstellung 20 und den Teil der Wählgasse 19 symbolhaft dar, der zwischen der Wählhebelstellung 5 und der Wählhebelstellung 20 verläuft.

### Bezugszeichenliste

- Anzeigeelement:: 1, 2, 12, 14, 26,27
- Pfeil:: 3, 4, 9, 10, 11, 13, 15
- stabile Wählhebelstellung:: 5
- instabile Wählhebelstellung:: 6, 7, 8, 17, 18, 20, 22, 23, 25
- Schaltgasse:: 16,21,24
- Wählgasse:: 19
- Schaltgassenanzeige:: 28, 29

## Patentansprüche

1. Optische Anzeigevorrichtung einer Wählhebelanordnung mit einem im Kraftfahrzeug gelagerten Wählhebel zum Umschalten zwischen unterschiedlichen Schaltzuständen eines Kraftfahrzeuggetriebes, welcher entlang wenigstens einer Schaltgasse aus einer ersten Wählhebelposition (5) in zumindest eine zweite Wählhebelposition (6) schwenkbar ist, wobei die optische Anzeigevorrichtung wenigstens zwei an unterschiedlichen Anzeigepositionen angeordnete Anzeigelemente (1,2,12,14,26,27) zum Anzeigen von den Schaltzuständen eineindeutig zugeordneten Symbolen (A,B,C) und eine Erfassungsvorrichtung zum Erfassen des aktuellen Schaltzustands aufweist, wobei von einem Anzeigelement während des Betriebs der Anzeigevorrichtung stets das dem aktuellen Schaltzustand zugeordnete Symbol (A,B,C) angezeigt wird, **dadurch gekennzeicbnet,** dass der Wählhebel in zumindest eine nicht in der wenigstens einen Schaltgasse liegende, dritte Wählhebelposition schwenkbar ist, welcher ein an einer dritten Anzeigeposition (7) angeordnetes drittes Anzeigeelement zugeordnet ist, welches mit den anderen beiden Anzeigeelementen nicht auf einer Geraden liegt, dass die Anzeigelemente derart angeordnet sind, dass die Projektion der Wählhebelpositionen auf eine Ebene durch eine geraden- und parallelentreue Abbildungsvorschrift in die Anzeigepositionen überführbar ist, und dass das über die Abbildungsvorschrift erzeugte Bild des Schwenkraums des Wählhebels mittels Schaltgassenanzeigen (28,29) optisch hervorhebbar ist, die sich von dem ersten zu dem zweiten sowie von dem ersten zu dem dritten Anzeigelement hin erstrecken.

2. Optische Anzeigevorrichtung nach Anspruch 1, **dadurch gekennzeichnet, dass** von dem zweiten Anzeigelement das einen auswählbaren der Schaltzustände zugeordnete Symbol angezeigt wird.

3. Optische Anzeigevorrichtung nach Anspruch 1 oder 2, **dadurch gekennzeichnet, dass** die erste Wählhebelposition eine stabile Wählhebelposition (5) und die zweite Wählhebelposition eine instabile Wahlhebelposition (6,7,8,17,18,20,22,23,25) ist.

4. optische Anzeigevorrichtung nach Anspruch 1, **dadurch gekennzeichnet, dass** die dritte Wählhebelposition eine instabile Wählhebelposition ist.

5. Optische Anzeigevorrichtung nach einem der Ansprüche 1 bis 4, **dadurch gekennzeichnet, dass** die Anzeigelemente separat von der Wählhebelanordnung im Kraftfahrzeug angeordnet sind.

6. Optische Anzeigevorrichtung nach Anspruch 5, **dadurch gekennzeichnet, dass** die Anzeigeelemente im Armaturenbrett oder in der Mittelkonsole angeordnet sind.

7. Optische Anzeigevorrichtung nach Anspruch 1, **dadurch gekennzeichnet, dass** jede Schaltgassananzeige (28,29) unabhängig von den anderen Schaltgassenanzeigen auf wenigstens zwei unterschiedliche Weisen optisch dargestellt werden kann.

## Claims

1. Optical display device for a selector lever arrangement with a selector lever mounted in the motor vehicle for shifting between different shift states of a motor vehicle transmission, which can be pivoted along at least one shift track from a first selector lever position (5) into at least a second selector lever position (6), and the optical display device has at least two display elements (1, 28, 12, 14, 26, 27) associated with different display positions for displaying symbols (A, B, C) unambiguously associated with the single shift states and a detection device for detecting the current shift state, and the symbol (A, B, C) associated with the current shift state is always displayed by a display element during operation of the display device, **characterised in that** the selector lever can be pivoted into at least a third selector lever position not lying in the at least one shift track which is associated with a third display element provided for a third display position (7) which does not lie on a straight line with the other two display elements, and the display elements are disposed so that the projection of the selector lever positions can be transferred to the display positions on a plane by means of imaging rules reflecting the real linear and parallel layout, and the image of the pivoting space of the selector lever generated by the imaging rules can be visually highlighted by means of shift track displays (28, 29) which extend from the first to the second and from the first to the third display element.

2. Optical display device as claimed in claim 1, **characterised in that** a symbol associated with one of the selectable shift states is displayed by the second display element.

3. Optical display device as claimed in claim 1 or 2; **characterised in that** the first selector lever position is a stable selector lever position (5) and the second selector lever position is an unstable selector lever position (6, 7, 8, 17, 18, 20, 22, 23, 25).

4. Optical display device as claimed in claim 1, **characterised in that** the third selector lever position is an unstable selector lever position.

5. Optical display device as claimed in one of claims 1 to 4, **characterised in that** the display elements are disposed separately from the selector lever arrangement in the motor vehicle.

6. Optical display device as claimed in claim 5, **characterised in that** the display elements are disposed in the dashboard or in the centre panel.

7. Optical display device as claimed in claim 1, **characterised in that** each shift track display (28, 29) can be visually displayed independently of the other shift track displays in at least two different ways.

## Revendications

1. Dispositif d'affichage optique d'un système de levier de sélection, avec un levier de sélection monté dans un véhicule, pour la commutation entre différents états de commutation d'une transmission de véhicule automobile, qui est susceptible de basculer, le long d'au moins une piste de commutation, d'une première position de levier de sélection (5) en au moins une deuxième position de levier de sélection (6), le dispositif d'affichage optique présentant au moins deux éléments d'affichage (1, 28, 12, 14, 26, 27) disposés à des positions d'affichage différentes, pour afficher des symboles (A, B, C) associés de façon univoque aux états de commutation, et un dispositif de détection pour détecter l'état de commutation actuel, où, par un élément d'affichage, pendant le fonctionnement du dispositif d'affichage, en permanence le symbole (A, B, C) associé à l'état de commutation actuel est affiché, **caractérisé en ce que** le levier de sélection est susceptible de basculer en au moins une troisième position de levier de sélection, située en au moins une piste de commutation, à laquelle est associé un troisième élément d'affichage disposé en une troisième position d'affichage (7), troisième élément d'affichage qui n'est pas situé sur une droite avec les deux autres éléments d'affichage, **en ce que** les éléments d'affichage sont disposés de manière que la projection des positions de levier de sélection sur un plan, au moyen d'une prescription de représentation imagée, rectiligne et fidèlement parallèle, est susceptible d'être passée aux positions d'affichage et **en ce que** l'image, produite par la prescription de représentation, de l'espace de basculement du levier de sélection peut être mise en évidence optiquement au moyen d'affichages de pistes de commutation (28, 29) s'étendant du premier au deuxième ainsi que du premier au troisième élément d'affichage.

2. Dispositif d'affichage optique selon la revendication 1, **caractérisé en ce que** le symbole associé à l'un, sélectionnable, des états de commutation est affiché par le deuxième élément d'affichage.

3. Dispositif d'affichage optique selon la revendication 1 ou 2, **caractérisé en ce que** la première position de levier de sélection est une position de levier de sélection (5) stable et la deuxième position de levier de sélection est une position de levier de sélection (6, 7, 8, 17, 18, 20, 22, 23, 25) instable.

4. Dispositif d'affichage optique selon la revendication 1, **caractérisé en ce que** la troisième position de levier de sélection est une position de levier de sélection instable.

5. Dispositif d'affichage optique selon l'une des revendications 1 à 4, **caractérisé en ce que** les éléments d'affichage sont disposés séparément de l'agencement du système de levier de sélection dans le véhicule.

6. Dispositif d'affichage optique selon la revendication 5, **caractérisé en ce que** les éléments d'affichage sont disposés dans le tableau de bord, ou dans la console centrale.

7. Dispositif d'affichage optique selon la revendication 1, **caractérisé en ce que** chaque affichage de pistes de commutation (28, 29) peut être représenté optiquement, indépendamment des autres affichages de pistes de commutation, d'au moins deux manières différentes.
